# EUROPEAN PATENT APPLICATION

(11) **EP 4 765 899 A1**
(43) Date of publication of application: **24.06.2026**
(21) Application number: 25224904.0
(22) Date of filing: 18.12.2025
(51) Int. Cl.: H04W 4/48, H04W 4/90, H04W 4/30, H04W 4/38, B63B 79/00, H04L 51/214, H04L 67/12, G08B 25/00, G08B 25/06, G08B 25/10, G08B 26/00, G08B 27/00

(54) **METHOD AND APPARATUS FOR TRANSMITTING NOTIFICATION IN VESSEL USING METAL BODY COMMUNICATION**

(30) Priority: 23.12.2024 KR 20240194662; 28.03.2025 KR 20250040601
(71) Applicant: ZN Technologies Co., Ltd., Busan 46744 (KR)
(72) Inventor: LEE, Hyun Il, 13555 Seongnam (KR); PARK, Chul Gyun, 06601 Seoul (KR); KANG, Chang Soo, 17012 Yongin (KR); PARK, Seil, 10078 Gimpo (KR)
(74) Representative: Pennacchio, Salvatore Giovanni

(57) **Abstract**

A method and apparatus for transmitting a notification in a vessel using metal body communication are provided. The apparatus for transmitting a notification in a vessel using metal body communication includes a communication circuit configured to communicate with a wireless communication relay device for performing metal body communication, a processor, and memory storing instructions executable by the processor, wherein, when the instructions are executed by the processor, the apparatus is configured to receive information about an event occurring in the vessel, determine, based on at least one of a type and a risk level of the event, a notification recipient to which a notification message about the event is transmitted, and transmit, through the wireless communication relay device, the notification message to one or more radios corresponding to the determined notification recipient.

## Description

### CROSS-REFERENCE TO RELATED APPLICATIONS

This application claims the benefit of Korean Patent Application No. 10-2024-0194662, filed on December 23, 2024, and Korean Patent Application No. 10-2025-0040601, filed on March 28, 2025, in the Korean Intellectual Property Office, the entire disclosures of which are incorporated herein by reference for all purposes.

### BACKGROUND

### 1. Field of the Invention

One or more embodiments relate to a method and apparatus for transmitting a notification in a vessel using metal body communication.

The present disclosure is derived through the support of the following research project.
[Project Reference Number] 9991008954
[Project Number] 24-SN-TC-01
[Department Name] Multiple Departments
[Project Management (Specialized) Institution Name] Agency for Defense Development
[Research Program Name] Civil-Military Technology Cooperation Research and Development (R&D) (Ministry of Trade, Industry and Energy, Defense Acquisition Program Administration, and Ministry of Science and Information and Communication Technology (ICT))
[Research Project Name] Development of a metalWave wireless communication system within a vessel, using a hull as a medium, for communication over 100 meters (m)
[Project Performing Institution Name] ZN Technologies Co., Ltd.
[Research Period] December 1, 2024 to December 31, 2025

### 2. Description of the Related Art

In environments shielded by metal (e.g., container boxes or vessels), wireless communication between devices positioned inside and outside a metal body may not be smoothly conducted. Due to the limitations of wireless communication, wired communication systems using wired cables have primarily been used onboard vessels. Wired communication systems may require physical modifications, such as drilling holes in the hull of a vessel, and may incur significant costs for installing and maintaining large amounts of wired cables.

### SUMMARY

According to an aspect, there is provided an apparatus for transmitting a notification including a communication circuit configured to communicate with a wireless communication relay device for performing metal body communication, a processor, and memory storing instructions executable by the processor, wherein, when the instructions are executed by the processor, the apparatus may be configured to receive information about an event occurring in the vessel, based on at least one of a type and a risk level of the event, determine a notification recipient to which a notification message about the event is transmitted, and transmit, through the wireless communication relay device, the notification message to one or more radios corresponding to the determined notification recipient.

When the instructions are executed by the processor, the apparatus may be configured to receive, from the one or more radios through the wireless communication relay device, a notification request signal related to an event occurring in the vessel and based on at least one of the type and the risk level of the event corresponding to the notification request signal, determine a notification recipient to which the notification message is transmitted.

The type of the event may include at least one of an event related to safety of the vessel, an event related to operation of the vessel, an event related to equipment of the vessel, and an event related to safety of a passenger and a crew member on board the vessel.

The event related to the safety of the vessel may include an event related to any one of an occurrence of a fire in the vessel, an occurrence of smoke in the vessel, an occurrence of gas leakage in the vessel, an occurrence of flooding in the vessel, and an occurrence of a collision risk for the vessel, the event related to the operation of the vessel may include an event related to any one of deviation from a standard course of the vessel, exceeding standard speed of the vessel, and a change in external weather, the event related to the equipment of the vessel may include an event related to any one of engine malfunction of the vessel, fuel shortage of the vessel, hydraulic system malfunction of the vessel, and communication malfunction in the vessel, and the event related to the safety of the passenger and the crew on board the vessel may include an event related to any one of a health issue affecting the passenger or the crew member and an occurrence of an incident in the vessel.

When the instructions are executed by the processor, the apparatus may be configured to, based on the type of the event, determine, as the notification recipient to which the notification message is transmitted, any one of a group of crew members belonging to a specific department, a specific crew member on board the vessel, and all crew members on board the vessel.

When the instructions are executed by the processor, the apparatus may determine all the crew members as the notification recipient when the risk level of the event corresponds to a highest risk level .

Notification recipients who receive a notification message are predetermined based on the event occurring in the vessel, and when the instructions are executed by the processor, the apparatus may be configured to, based on at least one of the type and the risk level of the event, select, from among the notification recipients that are predetermined, a notification recipient to which the notification message is transmitted.

When the instructions are executed by the processor, the apparatus may be configured to transmit the notification message to one or more radios corresponding to the determined notification recipient through a wireless communication relay device positioned in a specific zone among a plurality of wireless communication relay devices positioned on the vessel.

The one or more radios may have an identifier set to distinguish between different communication channels, and when the instructions are executed by the processor, the apparatus may be configured to, based on the identifier set on the one or more radios, transmit the notification message to the one or more radios corresponding to the determined notification recipient.

According to an aspect, there is provided a method of transmitting a notification including receiving information about an event occurring in the vessel, based on at least one of a type and a risk level of the event, determining a notification recipient to which a notification message about the event is transmitted, and transmitting, through a wireless communication relay device for performing metal body communication, the notification message to one or more radios corresponding to the determined notification recipient.

The receiving of the information about the event may include receiving, from the one or more radios through the wireless communication relay device, a notification request signal related to an event occurring in the vessel, and the determining of the notification recipient may include determining, based on at least one of the type and the risk level of the event corresponding to the notification request signal, a notification recipient to which the notification message is transmitted.

The determining of the notification recipient may include, based on the type of the event, determining, as the notification recipient to which the notification message is transmitted, any one of a group of crew members belonging to a specific department, a specific crew member on board the vessel, and all crew members on board the vessel.

The determining of the notification recipient may include determining all the crew members as the notification recipient when the risk level of the event corresponds to a highest risk level.

The determining of the notification recipient may include, based on at least one of the type and the risk level of the event, selecting, from among the notification recipients that are predetermined, a notification recipient to which the notification message is transmitted.

The transmitting of the notification message may include transmitting the notification message to one or more radios corresponding to the determined notification recipient through a wireless communication relay device positioned in a specific zone among a plurality of wireless communication relay devices positioned on the vessel.

The transmitting of the notification message may include, based on the identifier set on the one or more radios, transmitting the notification message to the one or more radios corresponding to the determined notification recipient.

Additional aspects of embodiments will be set forth in part in the description which follows and, in part, will be apparent from the description, or may be learned by practice of the disclosure.

### BRIEF DESCRIPTION OF THE DRAWINGS

These and/or other aspects, features, and advantages of the invention will become apparent and more readily appreciated from the following description of embodiments, taken in conjunction with the accompanying drawings of which:
FIG. 1 is a diagram illustrating a shipboard notification transmission system according to an embodiment.
FIG. 2 is a block diagram illustrating components of a notification transmission device, according to an embodiment.
FIGS. 3A to 3C are diagrams illustrating a notification transmission status of a notification transmission device, according to an embodiment.
FIG. 4 is a flowchart illustrating operations of a method of transmitting a notification according to an embodiment.

### DETAILED DESCRIPTION

The following structural or functional descriptions of embodiments are provided as examples only, and various alterations and modifications may be made to the embodiments. Accordingly, the embodiments are not construed as limited to the disclosure and should be understood to include all changes, equivalents, and replacements within the idea and the technical scope of the disclosure.

Although terms, such as first, second, and the like, may be used herein to describe various components, these terms should be used only to distinguish one component from another component. For example, a first component may be referred to as a second component, and similarly the second component may also be referred to as the first component.

It should be noted that if one component is described as being "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, components, or groups thereof, but do not preclude the presence or addition of one or more other features, integers, steps, operations, elements, components, or groups thereof.

Unless otherwise defined, all terms used herein including technical or scientific terms have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, embodiments are described in detail with reference to the accompanying drawings. When describing the embodiments with reference to the accompanying drawings, like reference numerals refer to like components and a repeated description related thereto will be omitted.

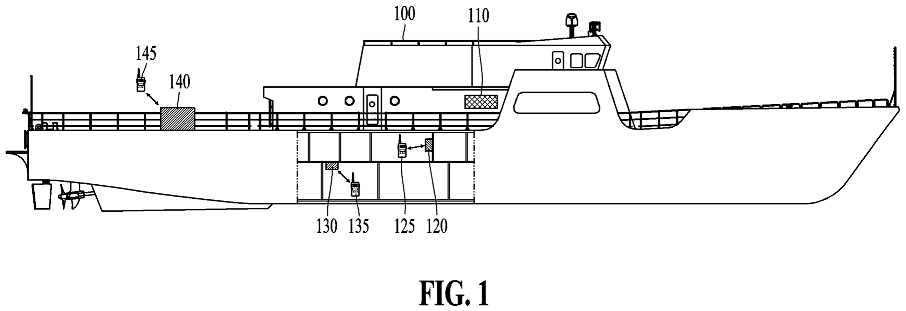

FIG. 1 is a diagram illustrating a shipboard notification transmission system according to an embodiment.

Referring to FIG. 1, using a notification transmission device 110, the shipboard notification transmission system may transmit a notification message about an event occurring in a vessel 100 to one or more radios. The notification message to be transmitted to the one or more radios may be transmitted from the notification transmission device 110 through a wireless communication relay device. Wireless communication relay devices 120, 130, and 140 may perform communication in the vessel 100 using a metal body (e.g., a hull) as a medium. The wireless communication relay devices 120, 130, and 140 may provide a communication relay function through metal body communication using a metal body as a medium. The wireless communication relay devices 120, 130, and 140 may receive signals and/or data from radios 125, 135, and 145 respectively connected to the wireless communication relay devices 120, 130, and 140 and may transmit the received signals and/or data to another wireless communication relay device using a metal body as a medium. In an embodiment, the notification transmission device 110 may transmit a notification message to the radios 125, 135, and 145 respectively connected to the wireless communication relay devices 120, 130, and 140 through the wireless communication relay devices 120, 130, and 140. For example, when the notification transmission device 110 transmits a notification message to any wireless communication relay device that wirelessly communicates with the notification transmission device 110, any wireless communication relay device may transmit the notification message to another wireless communication relay device through metal body communication. The notification transmission device 110 according to an embodiment may also perform metal body communication on its own, similar to the wireless communication relay devices 120, 130, and 140. Any terminal communication device, including the radios 125, 135, and 145 capable of communicating with the wireless communication relay devices 120, 130, and 140, may be connected to the wireless communication relay devices 120, 130, and 140. A wireless communication relay device may effectively perform wireless communication using a metal body as a medium in a communication shadow environment in which communication using radio waves is difficult due to a metal body such as the vessel 100, a container, and a trailer. A wireless communication relay device that performs communication using a metal body as a medium may be attached to a metal body, and the position to which the wireless communication relay device is attached may include a wall, ceiling, or bottom of the metal body. For example, the wireless communication relay device 120 may be attached to the wall of the hull in the vessel 100, the wireless communication relay device 130 may be attached to the ceiling of the hull in the vessel 100, and the wireless communication relay device 140 may be attached to the bottom of the hull outside the vessel 100.

The wireless communication relay devices 120, 130, and 140 may include an antenna device that is attached to the metallic hull of the vessel 100, forms an electromagnetic field in the metallic hull, and transmits voice data received from a data processing portion (e.g., a processor) through the metal body by loading the data into the electromagnetic field. The antenna devices of the wireless communication relay devices 120, 130, and 140 may receive signals and/or data transmitted to the electromagnetic field through the metal body and may transmit the received signals and/or data to a terminal communication device through the communication channels of the wireless communication relay devices 120, 130, and 140.

The principle by which signals and/or data may be transmitted through a metal body is described as follows. A metal medium may be, for example, a steel plate or frame structure of a hull. A case in which a metal medium is a magnetic material and a case in which a metal medium is a diamagnetic material are described below.

### When a metal medium is a magnetic material

Conductive layers of a first antenna may form an electromagnetic field in a dielectric layer. Then, an electromagnetic field in which a magnetic field is dominant is formed in the metal medium, which is a propagation medium, by this electromagnetic field. An electric field E1 of the generated electromagnetic field may propagate in a perpendicular direction through an aperture of the first antenna to the metal medium. The propagated electric field E1 may form an electromagnetic field B in which a magnetic field is dominant within the metal medium.

Then, by the theory of reversibility, a second antenna on a receiving side with a similar structure and principle may receive energy from the electromagnetic field formed within the metal medium. This process is where a change in the electromagnetic field B in which the magnetic field is dominant, is transmitted, through an aperture of the second antenna, to an electromagnetic field E2, in which the electric field is dominant, in a dielectric layer.

In communication using a metal body as a medium (also referred to as metal body communication), the magnetic field is dominant, so even if the shape and size of the metal medium change, a change in impedance may be small. Additionally, a metal medium has higher magnetic permeability than air, which may result in better radio wave transmission efficiency compared to a communication system that propagates radio waves through air. Therefore, communication through a metal medium, which is a magnetic material, may have a greater communication distance than magnetic field communication through air. In order to form an electromagnetic field in which a magnetic field is dominant, a resonant portion and a circuit portion of a wireless relay device may need to be designed so that an electric field of a predetermined size may be formed in a metal body in the resonant portion and the circuit portion.

Due to the electromagnetic field formed in the metal medium, energy may be transmitted to a resonator located at a predetermined distance from the metal medium. A magnetic field is dominant in the electromagnetic field formed in the metal medium, so an electric field may be radiated from the metal medium. Thus, when an antenna resonating at an operating frequency is within a predetermined distance from the metal medium, energy may be received.

A dielectric of the dielectric layer of the first antenna or the second antenna may miniaturize the thickness and size of the resonant portion and form the electromagnetic field B, in which the magnetic field is dominant, in the metal medium so that sufficient energy may be transmitted.

### When a metal medium is a paramagnetic material or a diamagnetic material

A current supplied to a conductive layer may form the electromagnetic field E1, in which an electric field is dominant, in the metal medium. Here, the electric field radiated from an aperture may not form the electromagnetic field B, in which a magnetic field is dominant, in the metal medium. This is because paramagnetic and diamagnetic materials have magnetic permeability similar to that of air. Therefore, the metal medium of a paramagnetic material or a diamagnetic material propagates the magnetic field in the air with similar strength and size, rather than more strongly, as in the case of a ferromagnetic material. In other words, the propagation distances in the air and inside the metal body are similar.

In the case of pure iron, a ferromagnetic material, the magnetic permeability may be around 4,000 to 5,000, whereas aluminum, a paramagnetic material, or silver (Ag), a diamagnetic material, may have a magnetic permeability of approximately 1.0, which may result in differences in the strength of magnetic field propagation within the metal body. Therefore, in this case, a signal may be transmitted to a receiver by a current induced in the metal medium from a layer of a conductive layer of an antenna that is in contact with the metal medium. In this case, an electric field radiated from an aperture may be induced in the metal body, and through this, a signal or power may be transmitted.

In a case of a structure with a metallic framework, such as the vessel 100 (e.g., a liquefied natural gas (LNG) vessel) shown in FIG. 1, radio waves may not pass through a metal, leading to reflection and/or attenuation, which may hinder smooth wireless communication. Therefore, in structures made of metallic frameworks, a wireless communication shadow zone, in which wireless communication is difficult or impossible, may be generated. For example, a wireless communication shadow zone may be generated in an area such as a pipe duct, an engine room, a bosun store, an engine control room (ECR), and a bow thruster room of the LNG vessel. In this case, since radio wave radiation through the air is easy, communication may need to be relayed between a wireless communication shadow zone and an area such as a living quarter or an upper deck including a cargo control room (CCR), a bridge, and a compass deck in which normal wireless communication operates smoothly. The wireless communication relay devices 120, 130, and 140 according to an embodiment may perform a relay role for relaying communication between a wireless communication possible zone and a wireless communication shadow zone.

The notification transmission device 110 may transmit a notification message about an event occurring in the vessel 100 to the radios 125, 135, and 145 through the wireless communication relay devices 120, 130, and 140. In this case, the notification transmission device 110 may determine a notification recipient to which the notification message is transmitted in order to transmit the notification message to one or more radios. The notification transmission device 110 may receive (or process) information about various events occurring in the vessel 100 and determine the notification recipient to which a notification message about an event is transmitted based on the type and risk level of the event. The notification transmission device 110 may transmit a notification message to one or more radios corresponding to the determined notification recipient among the radios 125, 135, and 145.

In the present disclosure, the notification transmission device 110 may minimize unnecessary notifications transmitted to crew members by limiting the transmission of information about various events occurring in the vessel 100 to people related to the events. The notification transmission device 110 may improve communication efficiency and prevent wireless channel overload by distinguishing between notification recipients according to the importance of an event. The notification transmission device 110 may transmit a notification message in real time to a relevant department and a person in charge when an event occurs, thereby enabling a person carrying a radio to quickly respond to the event (or accident) that occurs in the vessel 100. The notification transmission device 110 may enhance the efficiency of the operation of the vessel by reducing crew member fatigue caused by frequent notifications and improving communication efficiency.

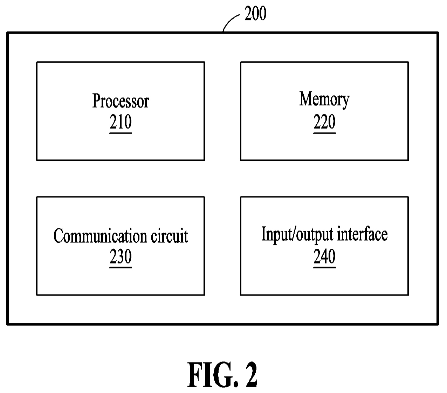

FIG. 2 is a block diagram illustrating components of a notification transmission device, according to an embodiment. Referring to FIG. 2, a notification transmission device 200 (e.g., the notification transmission device 110 of FIG. 1) may include a processor 210, memory 220, a communication circuit 230, and an input/output interface 240. In an embodiment, some of the components may be omitted from the notification transmission device 200, or another component may be added to the notification transmission device 200.

The processor 210 may control another component (e.g., a hardware or software component) of the notification transmission device 200 and perform a variety of data processing or computation. According to an embodiment, as at least part of data processing or computation, the processor 210 may store instructions or data received from another component in the memory 220, process the instructions or data stored in the memory 220, and store result data in the memory 220. The processor 210 may include a main processor (e.g., a central processing unit (CPU) or an application processor (AP)) or an auxiliary processor (e.g., a graphics processing unit (GPU), a neural processing unit (NPU), an image signal processor (ISP), a sensor hub processor, or a communication processor (CP)) that is operable independently of or in conjunction with the main processor. The processor 210 may control the notification transmission device 200 to perform one or more operations described in the present disclosure by executing the instructions stored in the memory 220.

The notification transmission device 200 may receive information about an event occurring in a vessel. The event occurring in the vessel may be detected through various sensors installed in the vessel, and the information about the event may be transmitted to the notification transmission device 200. The various sensors installed inside and outside the vessel may monitor the condition of the vessel in real time and collect related information. For example, an event related to an engine state, a fuel state, and a battery state of the vessel may be detected through a temperature sensor, a flow sensor, and a voltage sensor in the vessel. Additionally, an event such as a collision risk, course deviation, and a weather change during operation may be monitored in real time from navigation equipment of the vessel. Information such as a status, risk level, and expected situation of each event may be transmitted to the notification transmission device 200.

In an embodiment, the notification transmission device 200 may receive a notification request signal related to an event occurring in the vessel from one or more radios through a wireless communication relay device. When crew members directly observe an event occurring in the vessel, the crew members may report information about the event to a central system. In the process, the crew members may transmit a notification request signal to the notification transmission device 200 to notify other crew members of the event.

Based on at least one of the type and risk level of the event, the processor 210 may determine a notification recipient to which a notification message about an event is transmitted. The processor 210 may analyze the information about the event to determine the type and risk level (e.g., highest, high, medium, or low) of the event. Depending on the type and/or risk level of an event occurring in the vessel, crew members who receive a notification message may be determined. The type of an event occurring in the vessel may include at least one of an event related to the safety of the vessel, an event related to the operation of the vessel, an event related to the equipment of the vessel, and an event related to the safety of a passenger and a crew member on board the vessel. For example, the event related to the safety of the vessel may include an event related to any one of an occurrence of a fire in the vessel, an occurrence of smoke in the vessel, an occurrence of gas leakage in the vessel, an occurrence of flooding in the vessel, and an occurrence of a collision risk for the vessel. The event related to the operation of the vessel may include an event related to any one of deviation from the standard course of the vessel, exceeding the standard speed of the vessel, and a change in external weather. The event related to the equipment of the vessel may include an event related to any one of engine malfunction of the vessel, fuel shortage of the vessel, hydraulic system malfunction of the vessel, and communication malfunction in the vessel. The event related to the safe of the passenger and the crew member on board the vessel may include an event related to any one of a health issue affecting the passenger or the crew member and an occurrence of an incident in the vessel. The types of events described above are examples of events that may occur in a vessel, and the types of events are not limited to the types of events described above.

Based on at least one of the type and risk level of the event, the processor 210 may determine, as the notification recipient to which the notification message is transmitted, one of a group of crew members belonging to a specific department, a specific crew member on board the vessel, or all crew members on board the vessel. When the risk level of an event corresponds to the highest risk level, the processor 210 may determine all crew members as the notification recipient. The higher the risk, the wider the range of recipients who receive a notification message may be set. For example, in the case of the engine malfunction of the vessel among the events related to the equipment of the vessel, a notification message is transmitted only to a group of crew members responsible for the operation and equipment of the vessel. However, in the case of a high-risk event, such as flooding in the vessel, a notification message may be transmitted to all crew members on board the vessel.

In an embodiment, notification recipients who receive a notification message may be predetermined before an event occurs. Based on at least one of the type and risk level of an event, the processor 210 may select a notification recipient to which a notification message is transmitted among the predetermined notification recipients. For example, among the events related to the safety of the vessel, the occurrence of a fire in the vessel and the occurrence of flooding in the vessel may be preset to transmit notification messages to all crew members on board the vessel. On the other hand, the occurrence of smoke in the vessel and the occurrence of gas leakage in the vessel may be preset to transmit notification messages only to a predetermined crew member on board the vessel. The processor 210 may transmit a notification message to the radios of all crew members when an event, such as the occurrence of a fire in the vessel or the occurrence of flooding in the vessel, occurs.

In an embodiment, based on at least one of the type and risk level of an event corresponding to the notification request signal, the processor 210 may determine a notification recipient to which a notification message is transmitted. The processor 210 may analyze the notification request signal transmitted from a radio to determine the type and risk level of the event. The processor 210 may extract content related to an event from text information or voice information transmitted via a radio to determine what kind of event occurs and determine a notification recipient based on the type and/or risk level of the determined event. For example, when a crew member located in an engine room reports a current event via a radio using voice (e.g., "Engine overheating!"), the processor 210 may analyze the voice and determine that the event is the event related to the equipment of the vessel and/or is of medium risk.

The processor 210 may transmit a notification message to one or more radios corresponding to the determined notification recipient through a wireless communication relay device. The notification message may include a text notification output through a display of a radio or a voice notification and a notification sound (e.g., a warning sound) output through a speaker of the radio. The text and voice notifications may be preset (e.g., recorded or defined) messages. In an embodiment, the voice notification may be generated using a text-to-speech (TTS) engine that converts text into speech.

One or more radios may have an identifier set to distinguish between different communication channels. The processor 210 may transmit a notification message to one or more radios corresponding to the determined notification recipient based on the identifier set on the one or more radios. The identifier that distinguishes between communication channels of a radio may include communication frequency, color code, and a group identification (ID) (or call ID). In a vessel, to avoid frequency interference, different identifiers may be assigned to radios of groups of crew members belonging to a specific department. The radios may communicate with one another through communication channels distinguished by communication frequency, color code, and group ID set for each radio, and communication may be established between radios set with the same identifier. The processor 210 may identify in real time information about the identifiers set on the radios of the crew members. The processor 210 may distinguish the communication frequency, color code, and group ID assigned to a radio and transmit a notification message set according to the type and/or risk level of an event. The processor 210 may simultaneously transmit a plurality of notification messages to radios assigned different communication frequencies, color codes, and group IDs.

In an embodiment, the processor 210 may transmit a notification message to one or more radios corresponding to a determined notification recipient through a wireless communication relay device positioned in a specific zone (or predetermined zone) among a plurality of wireless communication relay devices positioned on the vessel. The processor 210 may classify the positions of the plurality of wireless communication relay devices by zone. In order to transmit a notification message only to crew members positioned in a specific zone, the processor 210 may transmit a notification message only to a wireless communication relay device positioned in the specific zone among the plurality of wireless communication relay devices. For example, when an event (or accident) occurs in the specific zone, the processor 210 may transmit a notification message only to some wireless communication relay devices in order to transmit the notification message to one or more radios in the specific zone.

The memory 220 may store instructions executable by one or more processors 210. The memory 220 may include volatile memory such as dynamic random-access memory (DRAM) and static RAM (SRAM) or non-volatile memory such as a magnetic hard disc, an optical disc, a floppy disc, flash memory, erasable programmable read-only memory (EPROM), and electrically EPRPM (EEPROM).

The communication circuit 230 may establish a direct (e.g., wired) communication channel or wireless communication channel between the notification transmission device 200 and another device and may perform a communication function through the established communication channel. The communication circuit 230 may include a CP that operates independently of the processor 210 and supports direct (e.g., wired) or wireless communication. The communication circuit 230 may be an element that implements a wireless communication interface (e.g., a Bluetooth communication interface, a cellular communication interface, a wireless fidelity (Wi-Fi) communication interface, or a global navigation satellite system (GNSS) communication interface) or a wired communication interface (e.g., a local rear network (LAN) communication interface) that performs wireless communication.

A request, a command, data, a file, or the like generated by the processor 210 of the notification transmission device 200 according to program code stored in a recording device such as the memory 220 may be transmitted to other devices through a network according to the control of the communication interface. Conversely, a signal, an instruction, data, a file, or the like from other devices may be received by the notification transmission device 200 through the communication interface of the notification transmission device 200 via the network. A signal, an instruction, data, or the like received through the communication interface may be transmitted to the processor 210 or the memory 220, and an instruction, a file, or the like may be stored in a storage medium that may be further included in the notification transmission device 200.

The input/output interface 240 may be for interfacing with an input/output device. The input/output interface 240 may include, for example, an input device such as a digital pen, a keyboard, a microphone, and a mouse, and/or an output device such as a light device, a display, and a speaker. The input/output interface 240 may be for interfacing with a device that integrates both input and output functions, such as a touchscreen.

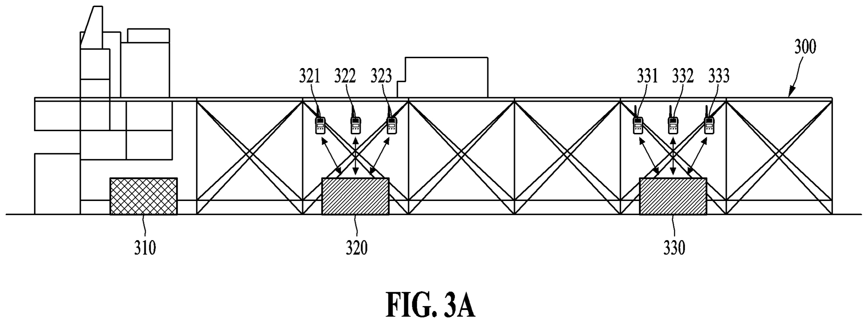

FIGS. 3A to 3C are diagrams illustrating a notification transmission status of a notification transmission device, according to an embodiment.

Referring to FIG. 3A, a notification transmission device 310 (e.g., the notification transmission device 110 of FIG. 1 or the notification transmission device 200 of FIG. 2) may transmit a notification message to all radios 321, 322, 323, 331, 332, and 333 of a vessel 300. The notification transmission device 310 may transmit a notification message to radios 321, 322, and 323 connected to a wireless communication relay device 320 via the wireless communication relay device 320. The notification transmission device 310 may transmit a notification message to radios 331, 332, and 333 connected to a wireless communication relay device 330 via the wireless communication relay device 330. In an embodiment, the notification transmission device 310 may receive fire detection information in a vessel from a fire detection sensor. The notification transmission device 310 may determine the occurrence of a fire in the vessel from the fire detection information and determine the risk level of the event as "high." The notification transmission device 310 may determine all crew members as notification recipients according to the type and risk level of an event and may transmit a notification message to all the radios 321, 322, 323, 331, 332, and 333 via the wireless communication relay devices 320 and 330.

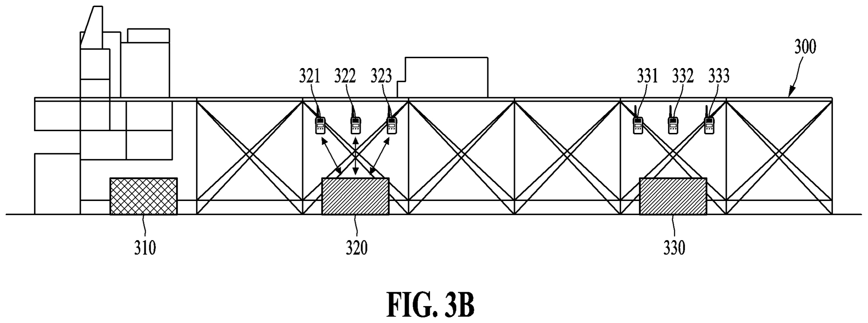

Referring to FIG. 3B, the notification transmission device 310 may transmit a notification message to some radios 321, 322, and 323 of the vessel 300. In an embodiment, the notification transmission device 310 may transmit a notification message to some radios 321, 322, and 323 through the wireless communication relay device 320 to transmit the notification message to a group of crew members belonging to a specific department. The notification transmission device 310 may not transmit a notification message to the wireless communication relay device 330 that communicates with the radios 331, 332, and 333 of crew members who do not belong to a specific department. In an embodiment, the notification transmission device 310 may transmit a notification message to the radios 321, 322, and 323 corresponding to notification recipients through the wireless communication relay device 320 positioned in a specific zone among the wireless communication relay devices 320 and 330 positioned on the vessel. The notification transmission device 310 may classify the wireless communication relay devices 320 and 330 positioned on the vessel according to zones and may transmit a notification message only to the radios 321, 322, and 323 connected to the wireless communication relay device 320 positioned in a specific zone.

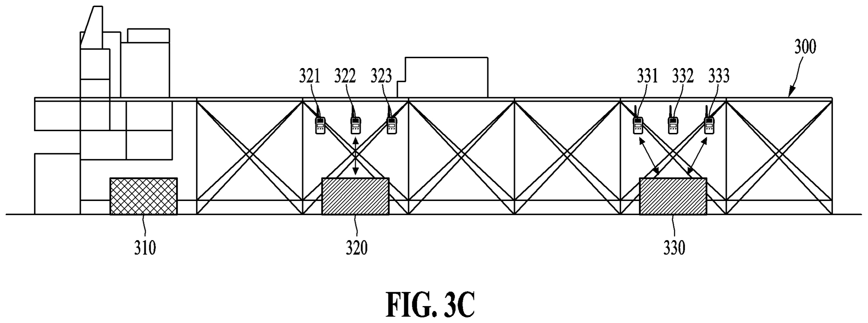

Referring to FIG. 3C, the notification transmission device 310 may transmit a notification message to some radios 322, 331, and 333. In an embodiment, to transmit a notification message to specific crew members on board the vessel, the notification transmission device 310 may transmit a notification message to some radios 322, 331, and 333 through the wireless communication relay devices 320 and 330. In an embodiment, the notification transmission device 310 may identify the communication frequency, color code, and group ID (call ID) of one or more radios corresponding to notification recipients and transmit a notification message through a communication channel distinguished by the identifier. For example, when some radios 322, 331, and 333 communicate with one another through a communication channel distinguished by a predetermined communication frequency (e.g., 156 megahertz (MHz)), a predetermined color code (e.g., CC 1), and a predetermined group ID (e.g., 1001), the notification transmission device 310 may identify the identifier and transmit a notification message only through the communication channel distinguished by the identifier. The notification transmission device 310 may minimize unnecessary notifications transmitted to crew members by transmitting information about various events occurring in the vessel 300 only to people related to the events.

FIGS. 3A to 3C illustrate that the number of wireless communication relay devices is two and the number of radios capable of communicating with each wireless communication relay device is three. However, this is for ease of description, and the number of wireless communication relay devices and the number of radios (or terminal communication devices) capable of communicating with the wireless communication relay devices are not limited thereto.

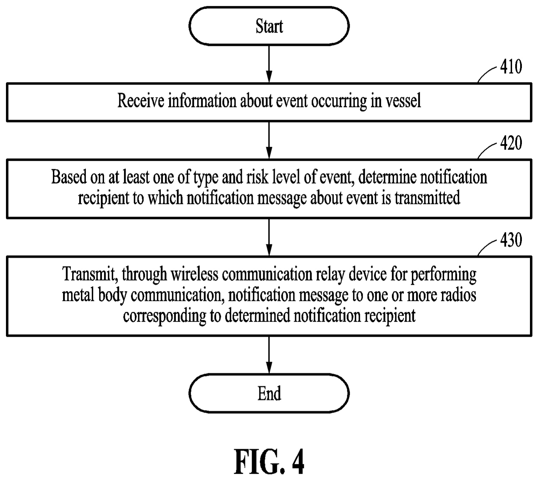

FIG. 4 is a flowchart illustrating operations of a method of transmitting a notification according to an embodiment. In an embodiment, at least one of operations of FIG. 4 may be performed simultaneously or in parallel with another operation, and the order of the operations may be changed. In addition, at least one of the operations may be omitted, or another operation may be additionally performed. The operations of the method of transmitting a notification may be performed by a notification transmission device (e.g., the notification transmission device 110 of FIG. 1 or the notification transmission device 200 of FIG. 2) of the present disclosure.

In operation 410, the notification transmission device may receive information about an event occurring in a vessel. The event occurring in the vessel may be detected through various sensors installed in the vessel, and information including a status, a risk level, and an expected situation of each event may be transmitted to the notification transmission device. The notification transmission device may receive a notification request signal related to an event occurring in the vessel from one or more radios through a wireless communication relay device.

In operation 420, based on at least one of a type and a risk level of the event, the notification transmission device may determine a notification recipient to which a notification message about the event is transmitted. The notification transmission device may analyze information about the event to determine the type and risk level (e.g., highest, high, medium, or low) of the event.

In an embodiment, based on at least one of a type and a risk level of an event corresponding to the notification request signal, the notification transmission device may determine a notification recipient to which a notification message is transmitted. The notification transmission device may analyze the notification request signal transmitted from a radio to determine the type and the risk level of the event. The notification transmission device may extract content related to the event from text information or voice information transmitted through the radio to determine what kind of event occurs and determine a notification recipient based on the type and/or risk level of the determined event.

In an embodiment, based on the type of the event, the notification transmission device may determine, as a notification recipient to which the notification message is transmitted, any one of a group of crew members belonging to a specific department, a specific crew member on board the vessel, and all crew members on board the vessel. When the risk level of the event corresponds to the highest risk level, the notification transmission device may determine all crew members as the notification recipient. In an embodiment, based on at least one of the type and risk level of the event, the notification transmission device may select a notification recipient to which a notification message is transmitted among predetermined notification recipients. Notification recipients who receive a notification message may be predetermined based on an event occurring in the vessel.

In operation 430, the notification transmission device may transmit, through a wireless communication relay device for performing metal body communication, a notification message to one or more radios corresponding to the determined notification recipient. The notification message transmitted by the notification transmission device may be output through a display and/or a speaker of a radio.

In an embodiment, the notification transmission device may transmit a notification message to one or more radios corresponding to a notification recipient determined through a wireless communication relay device positioned in a specific zone among a plurality of wireless communication relay devices positioned on the vessel. In order to transmit a notification message only to crew members positioned in the specific zone, the notification transmission device may transmit a notification message only to a wireless communication relay device positioned in the specific zone among the plurality of wireless communication relay devices. The notification transmission device may transmit a notification message by distinguishing between areas in the vessel.

In an embodiment, the notification transmission device may transmit the notification message to one or more radios corresponding to the determined notification recipient based on an identifier set on the one or more radios. The notification transmission device may distinguish the communication frequency, color code, and group ID assigned to a radio and transmit a notification message set according to the type and/or risk level of an event. The notification transmission device may simultaneously transmit a plurality of notification messages to radios assigned different communication frequencies, color codes, and group IDs.

The embodiments described herein may be implemented using a hardware component, a software component and/or a combination thereof. For example, the device, the method, and the components described in the embodiments may be implemented using a general-purpose or special-purpose computer, such as a processor, a controller and an arithmetic logic unit (ALU), a digital signal processor (DSP), a microcomputer, a field-programmable gate array (FPGA), a programmable logic unit (PLU), a microprocessor, or any other devices capable of responding to and executing instructions. A processing device may run an operating system (OS) and software applications that run on the OS. The processing device may also access, store, manipulate, process, and generate data in response to execution of the software. For purpose of simplicity, the description of the processing device is used as singular; however, one skilled in the art will appreciate that the processing device may include a plurality of processing elements and/or multiple types of processing elements. For example, the processing device may include a plurality of processors or a single processor and a single controller. In addition, different processing configurations are possible, such as parallel processors.

The software may include a computer program, a piece of code, an instruction, or one or more combinations thereof, to independently or collectively instruct or configure the processing device to operate as desired. Software and/or data may be stored in any type of machine, component, physical or virtual equipment, or computer storage medium or device capable of providing instructions or data to or being interpreted by the processing device. The software may also be distributed over network-coupled computer systems so that the software is stored and executed in a distributed fashion. The software and data may be stored in a non-transitory computer-readable storage medium.

The method according to the embodiments described above may be recorded in the computer-readable storage medium including program instructions to implement various operations of the embodiments described above. The computer-readable storage medium may also include, alone or in combination with the program instructions, data files, data structures, and the like. The program instructions recorded on the medium may be those specially designed and constructed for the purposes of embodiments, or they may be of the kind well-known and available to those having skill in the computer software arts. Examples of non-transitory computer-readable media include magnetic media such as hard disks, floppy disks, and magnetic tape; optical media such as compact disc ROM (CD-ROM) discs and digital video discs (DVDs); magneto-optical media such as floptical disks; and hardware devices that are specifically configured to store and perform program instructions, such as ROM, RAM, flash memory, and the like. Examples of program instructions include both machine code, such as produced by a compiler, and files containing higher-level code that may be executed by the computer using an interpreter.

As described above, although the embodiments have been described with reference to the limited drawings, one of ordinary skill in the art may apply various technical modifications and variations based thereon. For example, suitable results may be achieved if the described techniques are performed in a different order, and/or if components in a described system, architecture, device, or circuit are combined in a different manner, and/or replaced or supplemented by other components or their equivalents.

Therefore, other implementations, other embodiments, and equivalents to the claims are also within the scope of the following claims.

## Claims

1. An apparatus (110; 200; 310) for transmitting a notification in a vessel (100; 300) using metal body communication, the apparatus (110; 200; 310) comprising:
a communication circuit (230) configured to communicate with a wireless communication relay device (120; 130; 140; 320; 330) for performing metal body communication;
a processor (210); and
memory (220) storing instructions executable by the processor (210),
wherein, when the instructions are executed by the processor (210), the apparatus (110; 200; 310) is configured to:
receive information about an event occurring in the vessel (100; 300);
based on at least one of a type and a risk level of the event, determine a notification recipient to which a notification message about the event is transmitted; and
transmit, through the wireless communication relay device (120; 130; 140; 320; 330), the notification message to one or more radios (125; 135; 145; 321; 322; 323; 331; 332; 333) corresponding to the determined notification recipient.

2. The apparatus (110; 200; 310) of claim 1, wherein, when the instructions are executed by the processor (210), the apparatus (110; 200; 310) is configured to:
receive, from the one or more radios (125; 135; 145; 321; 322; 323; 331; 332; 333) through the wireless communication relay device (120; 130; 140; 320; 330), a notification request signal related to an event occurring in the vessel (100; 300); and
based on at least one of the type and the risk level of the event corresponding to the notification request signal, determine a notification recipient to which the notification message is transmitted.

3. The apparatus (110; 200; 310) of claim 1 or 2, wherein
the type of the event comprises at least one of an event related to safety of the vessel (100; 300), an event related to operation of the vessel (100; 300), an event related to equipment of the vessel (100; 300), and an event related to safety of a passenger and a crew member on board the vessel (100; 300),
the event related to the safety of the vessel (100; 300) comprises an event related to any one of an occurrence of a fire in the vessel (100; 300), an occurrence of smoke in the vessel (100; 300), an occurrence of gas leakage in the vessel (100; 300), an occurrence of flooding in the vessel (100; 300), and an occurrence of a collision risk for the vessel (100; 300),
the event related to the operation of the vessel (100; 300) comprises an event related to any one of deviation from a standard course of the vessel (100; 300), exceeding standard speed of the vessel (100; 300), and a change in external weather,
the event related to the equipment of the vessel (100; 300) comprises an event related to any one of engine malfunction of the vessel (100; 300), fuel shortage of the vessel (100; 300), hydraulic system malfunction of the vessel (100; 300), and communication malfunction in the vessel (100; 300), and
the event related to the safety of the passenger and the crew on board the vessel (100; 300) comprises an event related to any one of a health issue affecting the passenger or the crew member and an occurrence of an incident in the vessel (100; 300).

4. The apparatus (110; 200; 310) of any one of claims 1 to 3, wherein, when the instructions are executed by the processor (210), the apparatus (110; 200; 310) is configured to:
based on the type of the event, determine, as the notification recipient to which the notification message is transmitted, any one of a group of crew members belonging to a specific department, a specific crew member on board the vessel (100; 300), and all crew members on board the vessel (100; 300); and
determine all the crew members as the notification recipient when the risk level of the event corresponds to a highest risk level .

5. The apparatus (110; 200; 310) of any one of claims 1 to 4, wherein
notification recipients who receive a notification message are predetermined based on the event occurring in the vessel (100; 300), and
when the instructions are executed by the processor (210), the apparatus (110; 200; 310) is configured to, based on at least one of the type and the risk level of the event, select, from among the notification recipients that are predetermined, a notification recipient to which the notification message is transmitted.

6. The apparatus (110; 200; 310) of any one of claims 1 to 5, wherein, when the instructions are executed by the processor (210), the apparatus (110; 200; 310) is configured to transmit the notification message to one or more radios (125; 135; 145; 321; 322; 323; 331; 332; 333) corresponding to the determined notification recipient through a wireless communication relay device (120; 130; 140; 320; 330) positioned in a specific zone among a plurality of wireless communication relay devices (120; 130; 140; 320; 330) positioned on the vessel (100; 300).

7. The apparatus (110; 200; 310) any one of claims 1 to 6, wherein
the one or more radios (125; 135; 145; 321; 322; 323; 331; 332; 333) have an identifier set to distinguish between different communication channels, and
when the instructions are executed by the processor (210), the apparatus (110; 200; 310) is configured to, based on the identifier set on the one or more radios (125; 135; 145; 321; 322; 323; 331; 332; 333), transmit the notification message to the one or more radios (125; 135; 145; 321; 322; 323; 331; 332; 333) corresponding to the determined notification recipient.

8. A method of transmitting a notification in a vessel (100; 300) using metal body communication, the method comprising:
receiving information about an event occurring in the vessel (100; 300);
based on at least one of a type and a risk level of the event, determining a notification recipient to which a notification message about the event is transmitted; and
transmitting, through a wireless communication relay device (120; 130; 140; 320; 330) for performing metal body communication, the notification message to one or more radios (125; 135; 145; 321; 322; 323; 331; 332; 333) corresponding to the determined notification recipient.

9. The method of claim 8, wherein
the receiving of the information about the event comprises receiving, from the one or more radios (125; 135; 145; 321; 322; 323; 331; 332; 333) through the wireless communication relay device (120; 130; 140; 320; 330), a notification request signal related to an event occurring in the vessel (100; 300), and
the determining of the notification recipient comprises determining, based on at least one of the type and the risk level of the event corresponding to the notification request signal, a notification recipient to which the notification message is transmitted.

10. The method of claim 8 or 9, wherein
the type of the event comprises at least one of an event related to safety of the vessel (100; 300), an event related to operation of the vessel (100; 300), an event related to equipment of the vessel (100; 300), and an event related to safety of a passenger and a crew member on board the vessel (100; 300),
the event related to the safety of the vessel (100; 300) comprises an event related to any one of an occurrence of a fire in the vessel (100; 300), an occurrence of smoke in the vessel (100; 300), an occurrence of gas leakage in the vessel (100; 300), an occurrence of flooding in the vessel (100; 300), and an occurrence of a collision risk for the vessel (100; 300),
the event related to the operation of the vessel (100; 300) comprises an event related to any one of deviation from a standard course of the vessel (100; 300), exceeding standard speed of the vessel (100; 300), and a change in external weather,
the event related to the equipment of the vessel (100; 300) comprises an event related to any one of engine malfunction of the vessel (100; 300), fuel shortage of the vessel (100; 300), hydraulic system malfunction of the vessel (100; 300), and communication malfunction in the vessel (100; 300), and
the event related to the safety of the passenger and the crew member on board the vessel (100; 300) comprises an event related to any one of a health issue affecting the passenger or the crew member and an occurrence of an incident in the vessel (100; 300).

11. The method of any one of claims 8 to 10, wherein the determining of the notification recipient comprises, based on the type of the event, determining, as the notification recipient to which the notification message is transmitted, any one of a group of crew members belonging to a specific department, a specific crew member on board the vessel (100; 300), and all crew members on board the vessel (100; 300).

12. The method of any one of claims 8 to 11, wherein the determining of the notification recipient comprises determining all the crew members as the notification recipient when the risk level of the event corresponds to a highest risk level.

13. The method of any one of claims 8 to 12, wherein
notification recipients who receive a notification message are predetermined based on the event occurring in the vessel (100; 300), and
the determining of the notification recipient comprises, based on at least one of the type and the risk level of the event, selecting, from among the notification recipients that are predetermined, a notification recipient to which the notification message is transmitted.

14. The method of any one of claims 8 to 13, wherein the transmitting of the notification message comprises transmitting the notification message to one or more radios (125; 135; 145; 321; 322; 323; 331; 332; 333) corresponding to the determined notification recipient through a wireless communication relay device (120; 130; 140; 320; 330) positioned in a specific zone among a plurality of wireless communication relay devices (120; 130; 140; 320; 330) positioned on the vessel (100; 300).

15. The method of any one of claims 8 to 14, wherein
the one or more radios (125; 135; 145; 321; 322; 323; 331; 332; 333) have an identifier set to distinguish between different communication channels, and
the transmitting of the notification message comprises, based on the identifier set on the one or more radios (125; 135; 145; 321; 322; 323; 331; 332; 333), transmitting the notification message to the one or more radios (125; 135; 145; 321; 322; 323; 331; 332; 333) corresponding to the determined notification recipient.
